# EUROPEAN PATENT APPLICATION

(11) **EP 3 972 027 A1**
(43) Date of publication of application: **23.03.2022**
(21) Application number: 20805451.0
(22) Date of filing: 16.01.2020
(51) Int. Cl.: H01M 10/0562, H01M 10/0585, H01M 10/613, H01M 10/647, H01M 10/655

(54) **BATTERY**

(30) Priority: 13.05.2019 JP 2019090610
(71) Applicant: Panasonic Intellectual Property Management Co., Ltd., Osaka-shi, Osaka 540-6207 (JP)
(72) Inventor: KOGA, Eiichi, Osaka (JP)
(74) Representative: Grünecker Patent- und Rechtsanwälte PartG mbB
(86) International application number: PCT/JP2020/001203
(87) International publication number: WO 2020/230366

(57) **Abstract**

The present disclosure provides a highly reliable battery. A battery (1000) according to the present disclosure includes an electrode layer (100), a negative electrode layer (200), a solid electrolyte layer (300) located between the electrode layer (100) and the negative electrode layer (200), and a substrate (400) in contact with a surface of the electrode layer (100) opposite to the solid electrolyte layer (300). The substrate (400) has at least one through-hole (500) that extends from an upper surface of the substrate (400) to a lower surface of the substrate (400) and that has an electrically conductive inner wall. The upper surface and the lower surface are electrically conductive.

## Description

### Technical Field

The present disclosure relates to a battery.

### Background Art

PTL 1 discloses an all-solid-state battery in which a power-generating element is formed in a depression formed in an alumina plate. PTL 2 discloses an all-solid-state battery in which a power-generating element is sandwiched between insulating substrates.

### Citation List

### Patent Literature

PTL 1: International Publication No. 2002/065573
PTL 2: Japanese Unexamined Patent Application Publication No. 2003-168416

### Summary of Invention

### Technical Problem

In the related art, highly reliable batteries have been demanded.

Therefore, the present disclosure provides a battery whose reliability is improved.

### Solution to Problem

A battery according to an embodiment of the present disclosure includes a first electrode, a second electrode, a solid electrolyte layer located between the first electrode and the second electrode, and a substrate in contact with a surface of the first electrode opposite to the solid electrolyte layer. The substrate has at least one through-hole that extends from an upper surface of the substrate to a lower surface of the substrate and that has an electrically conductive inner wall. The upper surface and the lower surface are electrically conductive. Advantageous Effects of Invention

According to the present disclosure, the reliability of batteries can be improved.

### Brief Description of Drawings

[Fig. 1] Fig. 1 schematically illustrates a structure of a battery according to an embodiment.
[Fig. 2] Fig. 2 schematically illustrates a structure of a battery according to a modification 1 of the embodiment.
[Fig. 3] Fig. 3 schematically illustrates a structure of a battery according to a modification 2 of the embodiment.
[Fig. 4] Fig. 4 is a partially enlarged sectional view of a battery for describing a bonding portion between the inner wall of a through-hole and a positive electrode layer.

### Description of Embodiments

### (Overview of the present disclosure)

A battery according to an aspect of the present disclosure includes a first electrode, a second electrode, a solid electrolyte layer located between the first electrode and the second electrode, and a substrate in contact with a surface of the first electrode opposite to the solid electrolyte layer. The substrate has at least one through-hole that extends from an upper surface of the substrate to a lower surface of the substrate and that has an electrically conductive inner wall. The upper surface and the lower surface are electrically conductive.

Thus, when heat is generated in the electrodes during operation of the battery, the heat is conducted to the substrate through the first electrode and absorbed by the substrate. The heat absorbed by the substrate is dissipated from the surface of the substrate and also the surface of the through-hole, which suppresses an increase in temperature of the battery. This suppresses deterioration of battery characteristics due to heat generation during operation of the battery. Thus, the reliability of the battery can be improved.

For example, the substrate may be a heat sink.

This improves the heat dissipation property of the substrate and further suppresses an increase in temperature of the battery.

For example, the first electrode may include a first current collector, and the first current collector may be in contact with the substrate.

In this case, the first current collector is disposed between a power-generating element in the electrode, such as an active material layer, and the substrate. This suppresses exposure of an active material contained in the active material layer. Furthermore, when a part of the active material is chipped, slipping out of the chipped active material from the through-hole is suppressed. Therefore, the reliability of the battery can be further improved.

For example, the inner wall of the through-hole and the first electrode may be bonded to each other through a conductor.

Since the inner wall of the through-hole and the first electrode are bonded to each other, the mechanical connection between the substrate and the first electrode is improved. This suppresses, for example, breakage of the battery and thus improves the reliability of the battery.

For example, the conductor may include the same material as the first electrode.

Since the inner wall of the through-hole and the first electrode are bonded to each other through a conductor including the same material as the first electrode, the adhesiveness between the conductor and the first electrode is improved.

For example, the conductor may include a cured product of a thermosetting conductive paste.

Since the inner wall of the through-hole and the first electrode are bonded to each other by curing the thermosetting conductive paste, a bonding portion can be easily formed.

For example, the at least one through-hole disposed in the substrate may include a plurality of through-holes, and the number density of the plurality of through-holes per unit area may change from the center to the periphery of the substrate when viewed in plan. Herein, the number density of the plurality of through-holes per unit area refers to a density of the plurality of through-holes, which is a ratio of the number of the plurality of through-holes to unit area.

Thus, when the number density of through-holes per unit area is changed in accordance with, for example, the amount of heat generated in the first electrode or the required strength of the battery, the heat dissipation efficiency, mechanical strength, or the like of the battery can be improved.

For example, the number density may decrease from the center to the periphery of the substrate when viewed in plan.

In this case, many through-holes are formed in the central portion where heat of the battery is not easily dissipated. Therefore, the heat dissipation efficiency can be improved even when the same number of through-holes are formed.

For example, the substrate may be harder than the first electrode.

Since the substrate is harder than the first electrode, the deformation of the substrate is suppressed when pressure is applied during bonding between the substrate and the first electrode. Therefore, when pressure is applied during bonding, the first electrode is brought into intimate contact with a plane of the substrate while being deformed. This improves the bonding strength and also suppresses warpage of the battery.

For example, the substrate may have a lower specific gravity than the first electrode.

This decreases the weight of the battery and improves the weight energy density of the battery. Furthermore, since the decrease in weight suppresses impact due to, for example, dropping of the battery, the reliability of the bonding between the substrate and the first electrode can be improved.

For example, the substrate may include the same material as the first current collector.

In this case, the difference in thermal expansion coefficient between the substrate and the first current collector is not significantly adjusted. This suppresses, for example, separation at the bonding interface between the substrate and the first current collector caused by thermal cycle, which can further improve the heat dissipation property and the reliability of bonding.

For example, the substrate may include alumina.

In this case, the specific gravity of the substrate tends to be lower than that of the first electrode layer. This can suppress the influence of the battery including a substrate on weight energy density.

For example, the substrate may include a resin.

In this case, the specific gravity of the substrate tends to be lower than that of the first electrode layer. This can suppress the influence of the battery including a substrate on weight energy density.

Hereafter, embodiments will be specifically described with reference to the attached drawings.

The embodiments described below are general or specific embodiments. The numerical values, the shapes, the materials, the constituent elements, the arrangement and connection modes of constituent elements, and the like described in the embodiments below are merely illustrative and are not intended to limit the present disclosure. Among constituent elements in the following embodiments, constituent elements that are not described in independent claims expressing the broadest concept will be described as optional constituent elements.

The drawings are not necessarily illustrated in a strict manner. In the drawings, substantially the same configurations are denoted by the same reference numerals, and redundant description thereof will be omitted or simplified.

In this specification and the drawings, x, y, and z axes are the three axes of a three-dimensional orthogonal coordinate system. In each of the embodiments, the z-axis direction is a thickness direction of the battery. In this specification, the "thickness direction" refers to a direction perpendicular to the stacking surfaces of layers.

In this specification, the phrase "in plan view" means that the battery is viewed in its stacking direction. In this specification, the term "thickness" refers to lengths of the battery and each layer in the stacking direction.

In this specification, "inner" and "outer" of, for example, "inner side" and "outer side" refer to an inside and an outside of the battery when the battery is viewed in its stacking direction.

In this specification, the terms "above" and "below" in the configuration of the battery do not refer to an upward direction (vertically upward) and a downward direction (vertically downward), respectively, in absolute space recognition, but are defined by the relative positional relationship based on the stacking order in the stacked structure. Furthermore, the terms "above" and "below" are used not only when two constituent elements are disposed with a space therebetween and another constituent element is present between the two constituent elements, but also when two constituent elements are disposed in contact with each other.

### (Embodiment)

### [Overview of battery stack]

First, a battery according to this embodiment will be described.

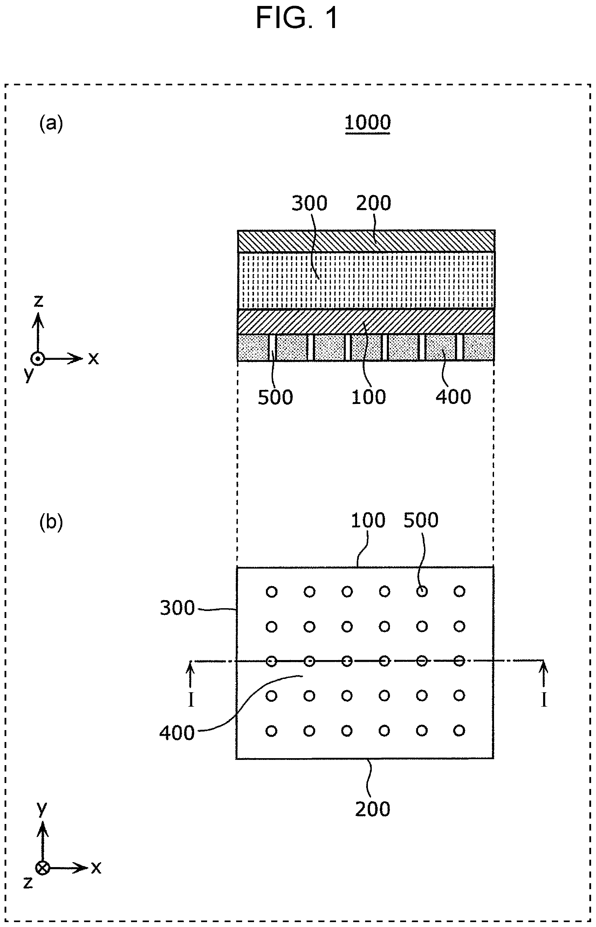

Fig. 1 schematically illustrates a structure of the battery according to this embodiment. Specifically, Fig. 1(a) is a sectional view of a battery 1000 according to this embodiment, and Fig. 1(b) is a plan view of the battery 1000 viewed from below in the z-axis direction. In Fig. 1(a), a section at a position indicated by line I-I of Fig. 1(b) is illustrated.

As illustrated in Fig. 1, the battery 1000 includes an electrode layer 100, a counter electrode layer 200, a solid electrolyte layer 300 located between the electrode layer 100 and the counter electrode layer 200, and a substrate 400 in contact with a surface of the electrode layer 100 opposite to the solid electrolyte layer 300. The electrode layer 100 is an example of the first electrode, and the counter electrode layer 200 is an example of the second electrode. The substrate 400 has a plurality of through-holes 500 that extend from the upper surface of the substrate 400 to the lower surface of the substrate 400 and that have an electrically conductive inner wall.

The counter electrode layer 200 is disposed so as to face the electrode layer 100 with the solid electrolyte layer 300 therebetween, and is a counter layer of the electrode layer 100. In this embodiment, for example, one of the electrode layer 100 and the counter electrode layer 200 is a positive electrode layer formed of a positive electrode active material layer and the other is a negative electrode layer formed of a negative electrode active material layer. The positive electrode layer may include a positive electrode active material layer and a positive electrode current collector. The negative electrode layer may include a negative electrode active material layer and a negative electrode current collector. Hereafter, the positive electrode active material layer and the negative electrode active material layer may be simply referred to as "active material layers". The positive electrode current collector and the negative electrode current collector may be simply referred to as "current collectors". An example in which the electrode layer and the counter electrode layer include a current collector will be described later.

The substrate 400 is, for example, a heat sink and has a larger surface area per unit volume than typical substrates. The upper surface and lower surface of the substrate 400 are electrically conductive. As described above, the inner walls of the through-holes 500 are electrically conductive. In other words, the upper surface portion and lower surface portion of the substrate 400 and the inner wall portions of the through-holes 500 are formed of a conductor. Thus, the upper surface and lower surface of the substrate 400 are electrically connected to each other through the conductor of the inner walls. Therefore, the substrate 400 functions as a terminal electrode. The side surfaces of the substrate 400 may be electrically conductive and may be formed of a conductor. In the battery 1000, the upper surface of the substrate 400 is bonded to the lower surface of the electrode layer 100. The substrate 400 and the electrode layer 100 may be directly bonded to each other through compression bonding or the like or may be bonded to each other through, for example, a cured product of a conductive paste or solder. In Fig. 1, the substrate 400 is bonded to the electrode layer 100, but may be bonded to the counter electrode layer 200. The substrate 400 may be bonded to each of the electrode layer 100 and the counter electrode layer 200.

According to the above configuration, the heat dissipation property of the battery can be improved, which improves the reliability of the battery. In particular, the heat dissipation property of thinned batteries with a large area can be improved. Therefore, a large capacity battery with high energy density and high reliability can be achieved.

That is, according to the above configuration, the warpage of a thinned battery with a large area is restrained by the bonded substrate, and the mechanical strength can be improved. This improves the mechanical stability. Furthermore, even if heat is generated in the active material layer during operation, the heat is conducted to the substrate 400 through the electrode layer 100 and absorbed by the substrate 400. The heat that has been absorbed by the substrate 400 is dissipated from the surface of the substrate 400 and also the surfaces of the inner walls of the through-holes 500. This suppresses deterioration of the battery characteristics due to heat generation during operation of the battery 1000. Thus, a highly reliable battery is provided.

When the substrate 400 and the electrode layer 100 are bonded to each other through a conductive paste, solder, or the like, the through-holes 500 also function as paths through which a gas, such as air, that is easily left at the interface between the substrate 400 and the electrode layer 100 is discharged. The gas left at the interface between the substrate 400 and the electrode layer 100 inhibits the heat conduction from the electrode layer 100 to the substrate 400. Therefore, when the gas present at the interface between the substrate 400 and the electrode layer 100 is discharged, the adherence between the substrate 400 and the electrode layer 100 is improved, which further improves the heat dissipation property provided by the substrate 400. For example, the thermal expansion of the gas left at the interface between the substrate and the electrode layer exerts a driving force for separating the substrate and the electrode layer. However, when the gas present at the interface between the substrate 400 and the electrode layer 100 is discharged to improve the adherence between the substrate 400 and the electrode layer 100, the mechanical connection between the substrate 400 and the electrode layer 100 is also improved. Although not illustrated, the inner walls of the through-holes 500 and the bottom surface of the electrode layer 100 may be bonded to each other through a material contained in the electrode layer 100, a conductive paste, solder, or the like at a contact portion between the interface of the electrode layer 100 and the substrate 400 and the inner walls of the through-holes 500. This further improves the mechanical connection between the substrate 400 and the electrode layer 100.

The function of the substrate 400 will be described in detail. The substrate 400 has an electrically conductive upper surface and an electrically conductive lower surface, and has a plurality of through-holes 500 each having an electrically conductive inner wall. Therefore, the substrate 400 functions as a terminal electrode. The surface area of the substrate 400 increases with the presence of the inner walls of the through-holes 500. Furthermore, when the inner walls are formed of a conductor having high thermal conductivity, the substrate 400 has a good heat dissipation property. In this configuration, the surface area of the substrate 400 increases. Therefore, the heat dissipation effect of the substrate 400 is better than the heat dissipation effect in the case where heat is dissipated from the exposed surface of typical current collectors. Thus, the substrate 400 serves as a good heat sink. Heat of the battery 1000 that is mainly generated in the active material layer is conducted to the substrate 400 through the electrode layer 100 which is a heat generating site, absorbed by the substrate 400, and dissipated from the substrate 400.

Furthermore, the material, conductive paste, or solder that is contained in the electrode layer 100 and used for bonding the substrate 400 and the electrode layer 100 to each other is spread not only at the interface at which the substrate 400 and the electrode layer 100 are bonded, but also to the inner walls of the plurality of through-holes 500, thereby causing the substrate 400 and the electrode layer 100 to adhere to each other. This improves the heat dissipation property and also improves the bonding strength between the substrate 400 and the electrode layer 100.

The material for the substrate 400 may be a material that is not easily deformed by pressure applied when the substrate 400 and the electrode layer 100 are bonded to each other compared with the material for the electrode layer 100. That is, the substrate 400 may be harder than the electrode layer 100. In this specification, the hardness is measured with, for example, a Vickers hardness tester. In this configuration, when bonding pressure is applied, the electrode layer 100 is brought into intimate contact with a plane of the substrate 400 while being deformed, which suppresses the warpage of the battery 1000. At the same time, the substrate 400 and the electrode layer 100 can be brought into intimate contact with each other while bubbles (voids) that are present at the interface between the substrate 400 and the electrode layer 100 and that inhibit thermal conduction are discharged to the through-holes 500. This improves the thermal conduction efficiency at the interface. Furthermore, since the material for the substrate 400 is a material that is not easily deformed by pressure during bonding, the warpage of the battery 1000 is suppressed and the impact resistance is improved.

When the electrode layer is constituted by a plurality of layers, the phrase "the substrate 400 is harder than the electrode layer" means that the substrate 400 is harder than a layer that is in contact with the substrate 400 among the plurality of electrode layers.

The specific gravity of the substrate 400 may be lower than that of the electrode layer 100. The specific gravity of the substrate 400 is an apparent specific gravity calculated from the volume and weight of the substrate 400 including the through-holes 500. This can decrease the weight of the battery 1000 and also provide an advantage to impact caused by dropping of batteries. Therefore, the reliability of the bonding between the substrate 400 and the electrode layer 100 can be improved.

The substrate 400 may include alumina. For example, the substrate 400 may be an alumina ceramic substrate which has a lower specific gravity and a higher thermal conduction than the electrode layer 100. Thus, the substrate 400 tends to have a lower specific gravity than the electrode layer 100, which can suppress the influence of the battery 1000 including the substrate 400 on weight energy density.

The substrate 400 may include a resin. For example, the substrate 400 may be a resin substrate which has a lower specific gravity than the electrode layer 100. The resin substrate may be, for example, a resin substrate obtained by forming a high-conductivity conductor such as copper on the surface of or inside a printed circuit board or a gas composite board. Thus, the substrate 400 tends to have a lower specific gravity than the electrode layer 100, which can suppress the influence of the battery 1000 including the substrate 400 on weight energy density.

According to the above configuration, even in a thinned battery with a large area, the heat dissipation property of the battery can be improved, and a large capacity battery with high energy density and high reliability can be provided.

That is, according to the above configuration, when a substrate having through-holes formed therein is provided, the substrate is firmly bonded to the electrode layer and has heat-absorbing and heat-dissipating functions. Therefore, even in a thinned battery with a large area, a large capacity, high reliability, and a high energy density are achieved.

As described above, for example, one of the electrode layer 100 and the counter electrode layer 200 in the battery 1000 is a positive electrode active material layer, and the other is a negative electrode active material layer.

The positive electrode active material layer contains at least a positive electrode active material. In other words, the positive electrode active material layer is a layer mainly formed of a positive electrode material such as a positive electrode active material. The positive electrode active material is a material in which metal ions such as lithium (Li) ions or magnesium (Mg) ions are inserted into or released from a crystal structure at a potential higher than that of the negative electrode, thereby causing oxidation or reduction. The type of positive electrode active material can be appropriately selected in accordance with the type of battery, and a publicly known positive electrode active material can be used. The positive electrode active material is, for example, a compound containing lithium and a transition metal element, such as an oxide containing lithium and a transition metal element or a phosphate compound containing lithium and a transition metal element. Examples of the oxide containing lithium and a transition metal element include layer oxides such as lithium-nickel composite oxides, e.g., LiNiₓM₁₋ₓO₂ (where M represents at least one element selected from Co, Al, Mn, V, Cr, Mg, Ca, Ti, Zr, Nb, Mo, and W, and x satisfies 0 < x ≤ 1), lithium cobaltate (LiCoO₂), lithium nickelate (LiNiO₂), and lithium manganate (LiMn₂O₄); and lithium manganate having a spinel structure (LiMn₂O₄, Li₂MnO₃, LiMO₂). Examples of the phosphate compound containing lithium and a transition metal element include lithium iron phosphate having an olivine structure (LiFePO₄). Furthermore, sulfur (S) and sulfides such as lithium sulfide (Li₂S) can be used for the positive electrode active material. In this case, positive electrode active material particles which are coated with lithium niobate (LiNbO₃) or the like or to which lithium niobate is added can also be used as the positive electrode active material. For the positive electrode active material, these materials may be used alone or in combination of two or more.

As described above, it is sufficient that the positive electrode active material layer contains at least a positive electrode active material. The positive electrode active material layer may be a mixture layer formed of a mixture of the positive electrode active material and other additives. Examples of the additives include solid electrolytes such as inorganic solid electrolytes and sulfide-based solid electrolytes, conductive aids such as acetylene black, and binders such as polyethylene oxide or polyvinylidene fluoride. For the positive electrode active material layer, the positive electrode active material and other additives such as solid electrolytes can be mixed at a certain ratio to improve the ionic conductivity in the positive electrode active material layer and also to improve the electron conductivity.

The thickness of the positive electrode active material layer is, for example, greater than or equal to 5 µm and less than or equal to 300 µm.

The negative electrode active material layer contains at least a negative electrode active material. In other words, the negative electrode active material layer is a layer mainly formed of a negative electrode material such as a negative electrode active material. The negative electrode active material is a material in which metal ions such as lithium (Li) ions or magnesium (Mg) ions are inserted into or released from a crystal structure at a potential lower than that of the positive electrode, thereby causing oxidation or reduction. The type of negative electrode active material can be appropriately selected in accordance with the type of battery, and a publicly known negative electrode active material can be used. Examples of the negative electrode active material that can be used include carbon materials such as natural graphite, synthetic graphite, graphite carbon fiber, and resin baked carbon; and alloy-based materials that are mixed with a solid electrolyte to obtain a mixture. Examples of the alloy-based materials include lithium alloys such as LiAl, LiZn, Li₃Bi, Li₃Cd, Li₃Sb, Li₄Si, Li_{4.4}Pb, Li_{4.4}Sn, Li_{0.17}C, and LiC₆; oxides of lithium and a transition metal element, such as lithium titanate (Li₄Ti₅O₁₂); and metal oxides such as zinc oxide (ZnO) and silicon oxide (SiOₓ). For the negative electrode active material, these materials may be used alone or in combination of two or more.

As described above, it is sufficient that the negative electrode active material layer contains at least a negative electrode active material. The negative electrode active material layer may be a mixture layer formed of a mixture of the negative electrode active material and other additives. Examples of the additives include solid electrolytes such as inorganic solid electrolytes and sulfide-based solid electrolytes, conductive aids such as acetylene black, and binders such as polyethylene oxide or polyvinylidene fluoride. For the negative electrode active material layer, the negative electrode active material and other additives such as solid electrolytes can be mixed at a certain ratio to improve the ionic conductivity in the negative electrode active material layer and also to improve the electron conductivity.

The thickness of the negative electrode active material layer is, for example, greater than or equal to 5 µm and less than or equal to 300 µm.

The solid electrolyte layer 300 contains at least a solid electrolyte. It is sufficient that the solid electrolyte is a publicly known solid electrolyte for batteries having ionic conductivity. For example, the solid electrolyte may be a solid electrolyte that conducts metal ions such as lithium ions and magnesium ions. The solid electrolyte may be appropriately selected in accordance with the conductive ionic species. For example, inorganic solid electrolytes such as sulfide-based solid electrolytes and oxide-based solid electrolytes can be used. Examples of the sulfide-based solid electrolytes include lithium-containing sulfides such as Li₂S-P₂S₅, Li₂S-SiS₂, Li₂S-B₂S₃, Li₂S-GeS₂, Li₂S-SiS₂-Lil, Li₂S-SiS₂-Li₃PO₄, Li₂S-Ge₂S₂, Li₂S-GeS₂-P₂S₅, and Li₂S-GeS₂-ZnS. Examples of the oxide-based solid electrolytes include lithium-containing metal oxides such as Li₂O-SiO₂ and Li₂O-SiO₂-P₂O₅, lithium-containing metal nitrides such as LiₓP_{y}O_{1-z}N_{z}, lithium phosphate (Li₃PO₄), and lithium-containing transition metal oxides such as lithium titanium oxide. For the solid electrolyte, these materials may be used alone or in combination of two or more.

The solid electrolyte layer 300 may contain, in addition to the above solid electrolyte, a binder such as polyethylene oxide or polyvinylidene fluoride.

The thickness of the solid electrolyte layer 300 is, for example, 5 µm to 150 µm.

The solid electrolyte layer 300 may be provided as an aggregate of solid electrolyte particles. Alternatively, the solid electrolyte layer 300 may be provided so as to have a sintered microstructure of the solid electrolyte.

The substrate 400 is a plate-shaped substrate. The substrate 400 is made of, for example, ceramic or resin. The upper surface and lower surface of the substrate 400 and the inner walls of the through-holes are formed of, for example, a coating layer of a conductor, thereby having electrical conductivity. Examples of the conductor include highly conductive metals such as copper, gold, and silver; and alloys and mixtures of the metals. Through this configuration, heat mainly generated in the active material layer is moved to the substrate 400 through the interface at which the electrode layer 100 and the substrate 400 are bonded to each other, and absorbed by using the heat capacity of the substrate 400. At the same time, the heat is dissipated from the lower surface of the substrate 400 that is not in contact with the inner walls of the through-holes 500 and the electrode layer 100 which are formed of a coating layer of a conductor. From the viewpoint of thermal conductivity, the conductor is, for example, a low-resistance metal. Examples of the method for coating the substrate 400 with a conductor include a method for applying a conductive paste, an electroplating method, and a vacuum deposition method.

When the substrate 400 is a ceramic substrate mainly made of ceramic, heat treatment may be performed after the coating with a conductor in order to improve the adhesiveness between the ceramic substrate and the conductor. The ceramic substrate is desirably made of a ceramic having high thermal conductivity. The material for the ceramic substrate may be, for example, a material mainly made of alumina, a nitride-based ceramic, or zinc oxide (ZnO). The ceramic substrate may be a ceramic substrate in which a metal conductor such as copper is formed as an inner layer or pasted through patterning.

When the substrate 400 is a resin substrate mainly made of resin, the resin substrate is made of, for example, a glass composite material having high thermal conductivity from the viewpoint of thermal conductivity. The material for the resin substrate may be a material whose thermal performance for substrate is improved by forming, using a high-conductivity conductor, an inner layer in a typical printed circuit board material such as FR4 or by pasting a high-conductivity conductor on the surface of a typical printed circuit board material. Alternatively, the substrate 400 may be a substrate obtained by laminating ceramic substrates and resin substrates or a multilayer substrate of ceramic substrates and resin substrates.

The material for the substrate 400 may be, for example, stainless steel, nickel, aluminum, iron, titanium, copper, palladium, gold, or platinum, or a metal material such as an alloy of the foregoing metals.

The plurality of through-holes 500 are through-holes that extend from the upper surface to the lower surface of the substrate 400. However, some of the plurality of through-holes 500 may be filled with a conductor or may be closed-bottom holes instead of through-holes. The shape of the through-holes 500 may be a round shape in plan view as illustrated in Fig. 1 or may be, for example, a rectangle, a square, a polygon, a star shape, or a cross. The inner walls of the through-holes 500 may have projections and depressions formed in order to increase the surface area. The number of through-holes 500 is not particularly limited. It is sufficient that the number of through-holes 500 is one or more depending on, for example, the required heat dissipation property.

The plurality of through-holes 500 may be uniformly arranged in the substrate 400, but may be non-uniformly arranged in the substrate 400. For example, the number density of the through-holes 500 per unit area may change from the center toward the periphery of the substrate 400 when viewed in plan. The number density of the through-holes 500 per unit area may concentrically change from the center toward the periphery of the substrate 400 when viewed in plan or may change in a different manner in a direction from the center toward the periphery.

For example, many of the plurality of through-holes 500 may be formed at positions that overlap with, in plan view, the electrode layer 100 including an active material layer that is easily subjected to heat generation. This can improve the heat dissipation effect. From the viewpoint of increasing the heat dissipation efficiency in the central portion where heat is not easily dissipated from the structural reason, many of the plurality of through-holes 500 may be formed in the central portion of the substrate 400 when viewed in plan. On the other hand, many of the plurality of through-holes 500 may be formed at positions near the periphery from the viewpoint of strength against impact. This can improve the impact resistance at the interface of the periphery where the substrate 400 and the electrode layer 100 are easily separated from each other. The positions at which the plurality of through-holes 500 are formed can be freely designed. As the number of through-holes 500 formed increases, the weight of the substrate 400 decreases and the surface area increases. Therefore, the weight energy density and the thermal reliability of the battery 1000 can be further improved.

Although not illustrated, a low-resistance conductor may be used in a bonding portion between the substrate 400 and the electrode layer 100. For example, the conductor used to bond the substrate 400 and the electrode layer 100 to each other is a cured product of a conductive resin (conductive paste) containing conductive metal particles such as silver particles. Any conductive resin may be used as long as the electrical conductivity and the bondability can be ensured in the operating temperature range of the battery 1000 and in the production process of the battery 1000. The substrate 400 and the electrode layer 100 may be bonded to each other with solder. Alternatively, the substrate 400 and the electrode layer 100 may be bonded to each other with a material used for the electrode layer 100. It is sufficient that the bonding portion between the substrate 400 and the electrode layer 100 has a structure (thickness) and a material that have durability not affecting the life characteristics and battery characteristics when an electric current is applied at a maximum rate required in an operating environment.

The case where the electrode layer 100 and the substrate 400 are disposed in contact with each other has been described above. The above-described effect is also provided through the same mechanism in the case where the counter electrode layer 200 and the substrate 400 are disposed in contact with each other.

The comparison between the configuration of the battery 1000 according to this embodiment and the configurations of the batteries in PTL 1 and PTL 2 shows the following differences.

PTL 1 discloses an all-solid-state battery in which a power-generating element is formed in a depression formed in an alumina plate. However, through-holes are not formed in the alumina plate, and electrical connection from the top surface to the bottom surface of the alumina plate is not established. PTL 2 discloses an all-solid-state battery in which a power-generating element is formed so as to be sandwiched between insulating substrates. In the insulating substrates, a contact hole and through-holes are formed. However, the contact hole used for connection with a current collector of the power-generating element is blocked by the terminal electrode. The through-holes are located in a region away from the power-generating element and are also blocked by the terminal electrode.

The arrangement and configuration of the substrate and the through-holes in PTL 1 and PTL 2 are different from those of the present disclosure, which poses the following problems.

In the configuration in PTL 1, the interface at which the power-generating element and the alumina plate are bonded to each other serves as a barrier. This suppresses transfer of heat generated in the battery to the bottom surface of the alumina plate and dissipation of the heat from the bottom surface. Furthermore, since through-holes are not formed, the power-generating element and the alumina plate are bonded only at the interface, and removal of voids during bonding is also difficult. This tends to decrease the bonding strength. Therefore, increasing the capacity and decreasing the thickness have their limits, and the bonding retention upon impact is also inevitably low. Thus, the configuration in PTL 1 poses problems in terms of the limits of decreasing the thickness and increasing the capacity and the reliability of impact resistance and the like.

In PTL 2, holes (contact hole and through-holes) formed in the substrate are blocked, and are arranged with a poor effect of dissipating heat from heat-generating sites. Furthermore, PTL 2 provides a structure in which the substrate and the battery cannot be pressure-bonded, which poses a problem in terms of reliability of impact resistance and the like.

In contrast, the battery 1000 according to this embodiment does not pose the above-described problems. In PTL 1 and PTL 2, the problems of the structure, heat dissipation property, and bondability described in this embodiment and the configuration of through-holes are neither disclosed nor suggested.

### [Modification 1]

Hereafter, a modification 1 of the embodiment will be described. In the following description of the modification 1, points different from those in the embodiment will be mainly described, and the description of points in common is omitted or simplified.

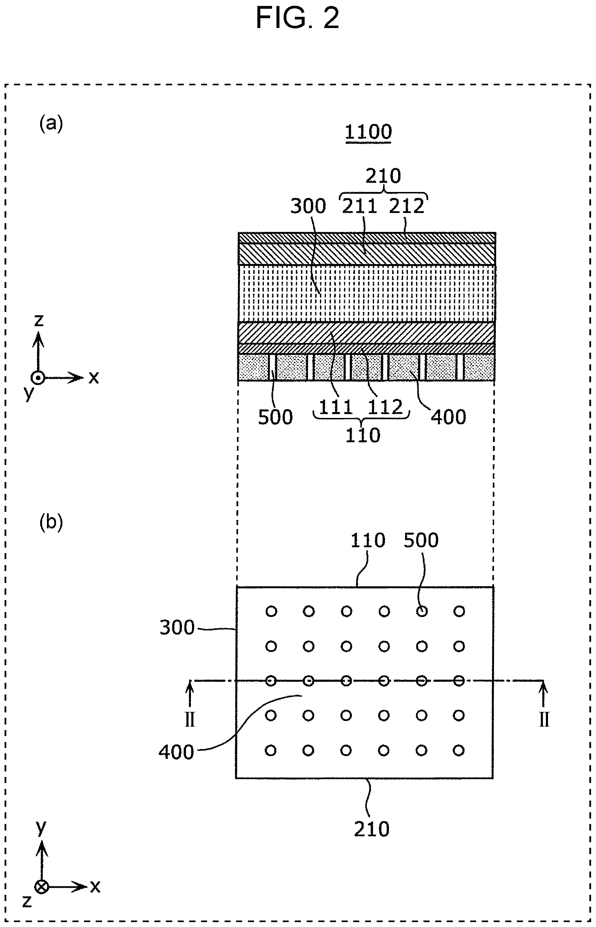

Fig. 2 schematically illustrates a structure of a battery according to the modification 1 of the embodiment. Specifically, Fig. 2(a) is a sectional view of a battery 1100 according to this embodiment. Fig. 2(b) is a plan view of the battery 1100 viewed from below in the z-axis direction. In Fig. 2(a), a section at a position indicated by line II-II of Fig. 2(b) is illustrated.

As illustrated in Fig. 2, the battery 1100 according to the modification 1 of the embodiment is different from the battery 1000 according to the embodiment in that an electrode layer 110 and a counter electrode layer 210 each include an active material layer and a current collector.

The battery 1100 includes an electrode layer 110, a counter electrode layer 210, a solid electrolyte layer 300 located between the electrode layer 110 and the counter electrode layer 210, a substrate 400 in contact with a surface of the electrode layer 110 opposite to the solid electrolyte layer 300. The substrate 400 has a plurality of through-holes 500 that extend from the upper surface of the substrate 400 to the lower surface of the substrate 400 and that have an electrically conductive inner wall. The electrode layer 110 is an example of the first electrode, and the counter electrode layer 210 is an example of the second electrode.

The electrode layer 110 includes an electrode active material layer 111 and an electrode current collector 112. The counter electrode layer 210 includes a counter electrode active material layer 211 and a counter electrode current collector 212. The solid electrolyte layer 300 is disposed between the electrode active material layer 111 and the counter electrode active material layer 211. The lower surface of the electrode current collector 112 is in contact with the substrate 400. That is, the battery 1100 has a structure in which the substrate 400, the electrode current collector 112, the electrode active material layer 111, the solid electrolyte layer 300, the counter electrode active material layer 211, and the counter electrode current collector 212 are stacked in this order. The electrode current collector 112 is an example of the first current collector.

In this modification, for example, one of the electrode layer 110 including the electrode active material layer 111 and the electrode current collector 112 and the counter electrode layer 210 including the counter electrode active material layer 211 and the counter electrode current collector 212 is a positive electrode layer including a positive electrode active material layer and a positive electrode current collector, and the other is a negative electrode layer including a negative electrode active material layer and a negative electrode current collector.

The positive electrode current collector and the negative electrode current collector are not particularly limited as long as they are formed of a material having electrical conductivity. The current collector may be, for example, a foil-shaped, plate-shaped, or mesh-like current collector formed of stainless steel, nickel, aluminum, iron, titanium, copper, palladium, gold, or platinum or an alloy of two or more of the foregoing metals. The material for the current collector may be appropriately selected in consideration of no melting and decomposition in the production process and at an operating temperature and an operating pressure and also in consideration of the battery operating potential applied to the current collector and the electrical conductivity. The material for the current collector may also be selected in accordance with the required tensile strength and heat resistance. The material for the current collector may be an electrolytic copper foil having high strength or a clad material obtained by laminating different metal foils. The thickness of the current collector is, for example, greater than or equal to 10 µm and less than or equal to 100 µm.

In the battery 1100, the substrate 400 and the electrode current collector 112 are bonded to each other. The substrate 400 and the electrode current collector 112 may be bonded to each other through compression bonding. The substrate 400 and the electrode current collector 112 may be bonded to each other with a low-resistance conductor therebetween. For example, the conductor used to bond the substrate 400 and the electrode current collector 112 is a cured product of a conductive resin containing conductive metal particles such as silver particles. The substrate 400 and the electrode current collector 112 may be bonded to each other with solder. Alternatively, the substrate 400 and the electrode current collector 112 may be bonded to each other by a method such as thermal fusion using a material contained in the electrode current collector 112. Furthermore, the inner walls of the through-holes 500 and the electrode current collector 112 may be bonded to each other with a conductor such as the above-described material.

Even when the electrode layer 110 includes the electrode current collector 112, heat of the battery 1100 that is mainly generated in the active material layer is conducted to the substrate 400 in the shortest distance through the electrode current collector 112 in contact with the electrode active material layer 111 serving as a heat-generating site, absorbed by the substrate 400, and dissipated from the substrate 400. That is, as in the battery 1000 in the embodiment 1, the battery 1100 is also a highly reliable battery because deterioration of battery characteristics due to heat generation during operation of the battery 1100 is suppressed.

In the battery 1100, the electrode current collector 112 is disposed between the electrode active material layer 111 and the substrate 400. This suppresses exposure of an active material contained in the electrode active material layer 111. Furthermore, when a part of the active material is chipped, slipping out of the chipped active material from the through-holes 500 is suppressed. Therefore, the reliability of the battery is further improved.

In the battery 1100, the material for the substrate 400 may be a material that is not easily deformed by pressure applied when the substrate 400 and the electrode current collector 112 are bonded to each other compared with the material for the electrode current collector 112. That is, the substrate 400 may be harder than the electrode current collector 112. In this configuration, when bonding pressure is applied, the electrode layer 110 is brought into intimate contact with a plane of the substrate while being deformed, which suppresses the warpage of the battery 1100. The material for the substrate 400 may have a lower specific gravity than that for the electrode current collector 112.

In the battery 1100, the substrate 400 may include the same material as the electrode current collector 112. The same material as that of the electrode current collector 112 may be patterned on the substrate 400. Thus, the difference in thermal expansion coefficient between the substrate 400 and the electrode current collector 112 can be adjusted. Therefore, for example, the separation caused by thermal cycle at the interface at which the substrate 400 and the electrode current collector 112 are bonded to each other is suppressed, which can further improve the heat dissipation property and the bonding reliability.

### [Modification 2]

Hereafter, a modification 2 of the embodiment will be described. In the following description of the modification 2, points different from those in the embodiment and the modification 1 of the embodiment will be mainly described, and the description of points in common is omitted or simplified.

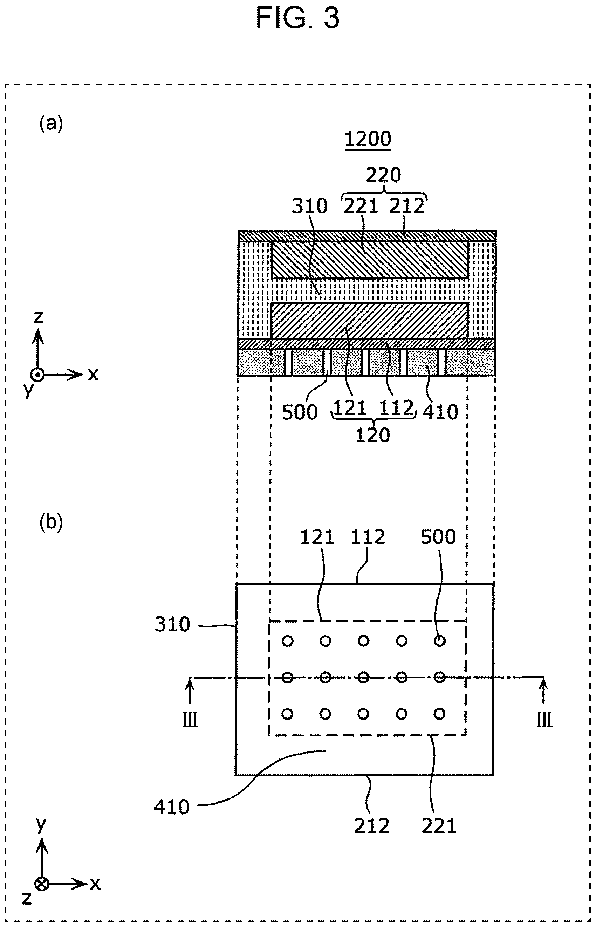

Fig. 3 schematically illustrates a structure of a battery according to the modification 2 of the embodiment. Specifically, Fig. 3(a) is a sectional view of a battery 1200 according to this embodiment. Fig. 3(b) is a plan view of the battery 1200 viewed from below in the z-axis direction. In Fig. 3(a), a section at a position indicated by line III-III of Fig. 3(b) is illustrated.

As illustrated in Fig. 3, the battery 1200 according to the modification 2 of the embodiment is different from the battery 1100 according to the modification 1 of the embodiment in that a solid electrolyte layer 310 is disposed outside an electrode active material layer 121 and a counter electrode active material layer 221 in plan view and in terms of positions of a plurality of through-holes 500 disposed in the substrate 410.

The battery 1200 includes an electrode layer 120, a counter electrode layer 220, a solid electrolyte layer 310 located between the electrode layer 120 and the counter electrode layer 220, and a substrate 410 in contact with a surface of the electrode layer 120 opposite to the solid electrolyte layer 310. The substrate 410 has a plurality of through-holes 500 that extend from the upper surface of the substrate 410 to the lower surface of the substrate 410 and that have an electrically conductive inner wall. The electrode layer 120 is an example of the first electrode, and the counter electrode layer 220 is an example of the second electrode.

The electrode layer 120 includes an electrode active material layer 121 and an electrode current collector 112. The counter electrode layer 220 includes a counter electrode active material layer 221 and a counter electrode current collector 212. The solid electrolyte layer 310 is disposed between the electrode active material layer 121 and the counter electrode active material layer 221. The solid electrolyte layer 310 is also disposed outside each of the electrode active material layer 121 and the counter electrode active material layer 221 in plan view so as to be in contact with the side surface of each of the electrode active material layer 121 and the counter electrode active material layer 221. The lower surface of the electrode current collector 112 is in contact with the substrate 410. That is, the battery 1200 has a structure in which the substrate 410, the electrode current collector 112, the electrode active material layer 121, the solid electrolyte layer 310, the counter electrode active material layer 221, and the counter electrode current collector 212 are stacked in this order.

When viewed in plan, the number of through-holes 500 is larger in the central portion of the substrate 410 than in the peripheral portion of the substrate 410. That is, the number density of the through-holes 500 per unit area changes from the center toward the periphery of the substrate 410 when viewed in plan. Specifically, the number density decreases. The phrase "the number density of the through-holes 500 per unit area changes from the center toward the periphery" may refer to a stepwise change illustrated in Fig. 3 or a gradual change.

In the battery 1200, when viewed in plan, the number density of the through-holes 500 per unit area at the position at which the substrate 410 and the electrode active material layer 121 overlap each other is higher than that at the position at which the substrate 410 and the electrode active material layer 121 do not overlap each other. Thus, heat easily generated in the electrode active material layer 121 during operation of the battery can be efficiently dissipated.

In the battery 1200, the through-holes 500 are not disposed at the position at which the substrate 410 and the electrode active material layer 121 do not overlap each other, but the through-holes 500 may be disposed at the position at which the substrate 410 and the electrode active material layer 121 do not overlap each other.

### [Method for producing battery]

Next, an example of a method for producing a battery according to this embodiment will be described. Hereafter, a method for producing the above-described battery 1100 according to the modification 1 of the embodiment will be described. In the following description, the electrode layer 110 including the electrode active material layer 111 and the electrode current collector 112 and illustrated in Fig. 2 is a positive electrode layer 110 including a positive electrode active material layer 111 and a positive electrode current collector 112. The counter electrode layer 210 including the counter electrode active material layer 211 and the counter electrode current collector 212 and illustrated in Fig. 2 is a negative electrode layer 210 including a negative electrode active material layer 211 and a negative electrode current collector 212.

First, pastes for forming a positive electrode active material layer 111 and a negative electrode active material layer 211 by printing are prepared. For example, a Li₂S-P₂S₅-based sulfide glass powder mainly composed of a triclinic crystal and having an average particle size of about 10 µm is provided as a solid electrolyte raw material used for a mixture of each of the positive electrode active material layer 111 and the negative electrode active material layer 211. The glass powder may be a glass powder having a high ionic conductivity (e.g., 2 to 3 × 10⁻³ S/cm). For example, a Li·Ni·Co·Al composite oxide (LiNi_{0.8}Co_{0.15}Al_{0.05}O₂) powder having a layered structure and having an average particle size of about 5 µm is used as a positive electrode active material. A mixture containing the above positive electrode active material and the above glass powder is dispersed in an organic solvent or the like to prepare a paste for a positive electrode active material layer. For example, a natural graphite powder having an average particle size of about 10 µm is used as a negative electrode active material. Similarly, a mixture containing the above negative electrode active material and the above glass powder is dispersed in an organic solvent or the like to prepare a paste for a negative electrode active material layer.

Subsequently, for example, a copper foil having a thickness of about 30 µm is provided as a material used for a positive electrode current collector 112 and a negative electrode current collector 212. A paste for the positive electrode active material layer and a paste for the negative electrode active material layer are each printed on one surface of the copper foil by screen printing so as to have a predetermined shape and a thickness of about 50 µm to 100 µm. The paste for the positive electrode active material layer and the paste for the negative electrode active material layer are dried at 80°C to 130°C so as to have a thickness of 30 to 60 µm. Thus, a current collector (copper foil) on which the positive electrode active material layer 111 has been formed and a current collector (copper foil) on which the negative electrode active material layer 211 has been formed, that is, a positive electrode layer 110 and a negative electrode layer 210 are obtained.

Subsequently, a mixture containing the above glass powder is dispersed in an organic solvent or the like to prepare a paste for a solid electrolyte layer. The paste for the solid electrolyte layer is printed, with a metal mask, on the surface of the active material layer of each of the positive electrode layer 110 and the negative electrode layer 210. The thickness of the paste is, for example, about 100 µm. Subsequently, each of the positive electrode layer 110 and the negative electrode layer 210 on which the paste for the solid electrolyte layer has been printed is dried at 80°C to 130°C.

Subsequently, the solid electrolyte printed on the positive electrode active material layer 111 of the positive electrode layer 110 and the solid electrolyte printed on the negative electrode active material layer 211 of the negative electrode layer 210 are stacked so as to be in contact with each other and face each other, and accommodated in a die having a rectangular external shape.

Subsequently, an elastic sheet (thickness 70 µm) having an elastic modulus of about 5 × 10⁶ Pa is inserted between a press die punch and the stack. In this manner, a pressure is applied to the stack through the elastic sheet. Then, a pressure of 300 MPa is applied for 90 seconds while the press die is heated to 50°C to obtain a stack of the positive electrode layer 110, the solid electrolyte layer 300, and the negative electrode layer 210.

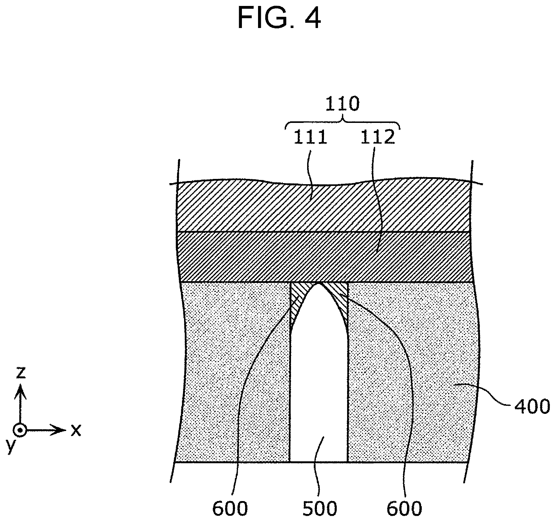

Subsequently, there is provided a substrate 400 (an alumina substrate whose top and bottom surfaces are subjected to nickel primary plating (2 µm) and gold plating (2 µm)) which contains alumina and has a thickness of 100 µm and in which many through-holes 500 having a diameter of 500 µm and having inner walls coated with gold by vacuum deposition are formed. A thermosetting conductive paste containing silver particles is printed on a substrate 400 by screen printing so as to have a thickness of about 30 µm. Then, the stack is placed on the conductive paste printed on the substrate 400, and the substrate 400 and the positive electrode layer 110 are subjected to compression bonding. At this time, an excess conductive paste at the interface at which the substrate 400 and the positive electrode layer 110 are bonded to each other leaches out to the through-holes 500. Then, a heat-curing treatment is performed in the air at about 100°C to 300°C for 60 minutes while the substrate 400 and the stack are immobilized. Cooling to room temperature is performed to obtain a battery 1100 including the substrate 400 serving as a heat sink. Furthermore, the inner walls of the through-holes 500 and the positive electrode layer 110 are bonded to each other through a conductor obtained by curing the leached-out conductive paste. Fig. 4 is a partially enlarged sectional view of the battery 1100 for describing a bonding portion between the inner walls of the through-holes 500 and the positive electrode layer 110. As illustrated in Fig. 4, the battery 1100 produced by the above-described production method has a bonding portion 600 that bonds the inner wall of the through-hole 500 and the positive electrode layer 110 to each other and is formed of a conductor. The bonding portion 600 bonds the end of the inner wall of the through-hole 500 on the positive electrode layer 110 side to a portion of the lower surface of the positive electrode layer 110 in which the through-hole 500 is formed when viewed in plan. The shape of the bonding portion 600 is not particularly limited, and is desirably a fillet shape illustrated in Fig. 4 from the viewpoint of increasing the bonding strength. The conductor contained in the bonding portion 600 may include the same material as the positive electrode layer 110. This increases the adhesiveness with the positive electrode layer 110.

The method and order of forming a battery are not limited to the above examples.

In the above-described production method, an example in which the paste for the positive electrode active material layer, the paste for the negative electrode active material layer, the paste for the solid electrolyte layer, and the conductive paste are applied by printing, but the production method is not limited thereto. The printing method may be, for example, a doctor blade method, a calender method, a spin coating method, a dip coating method, an ink jet method, an offset printing method, a die coating method, or a spray method.

In the above-described production method, the thermosetting conductive paste containing silver particles has been described as an example of the conductive paste, but the conductive paste is not limited thereto. The conductive paste is a thermosetting conductive paste containing highly conductive metal particles having a high melting point (e.g., higher than or equal to 400°C), metal particles having a low melting point (preferably lower than or equal to the curing temperature of the conductive paste, such as lower than or equal to 300°C), and a resin. Examples of the material for the highly conductive metal particles having a high melting point include silver, copper, nickel, zinc, aluminum, palladium, gold, and platinum; and alloys obtained by combining the foregoing metals. Examples of the material for the metal particles having a low melting point of lower than or equal to 300°C include tin, tin-zinc alloy, tin-silver alloy, tin-copper alloy, tin-aluminum alloy, tin-lead alloy, indium, indium-silver alloy, indium-zinc alloy, indium-tin alloy, bismuth, bismuth-silver alloy, bismuth-nickel alloy, bismuth-tin alloy, bismuth-zinc alloy, and bismuth-lead alloy. When such a conductive paste containing metal particles having a low melting point is used, a solid-phase reaction and a liquid-phase reaction proceed at contact sites between the metal particles in the conductive paste and the metal constituting the current collector and/or the conductor on the surface of the substrate 400 even at a heat-curing temperature lower than the melting point of the highly conductive metal particles having a high melting point. Thus, a diffusion region alloyed by the solid-phase reaction and the liquid-phase reaction at the interface between the conductive paste and the current collector and/or the surface of the substrate 400 is formed near the contact sites. When silver or a silver alloy is used for the conductive metal particles and copper is used for the current collector, the alloy formed is, for example, a silver-copper alloy, which is a highly conductive alloy. Furthermore, for example, a silver-nickel alloy or a silver-palladium alloy may be formed in accordance with the combination of the conductive metal particles and the current collector. Thus, the inner walls of the through-holes 500, the current collector, and the upper surface of the substrate 400 are integrally bonded to each other with an alloy-diffused layer. Through this configuration, the substrate 400 and the positive electrode layer 110 are more firmly bonded to each other. This suppresses separation at the bonding portion due to, for example, thermal cycle or impact.

The shape of the highly conductive metal particles having a high melting point and the metal particles having a low melting point may be any shape such as a spherical shape, a flake shape, or a needle-like shape. The particle size of the highly conductive metal particles having a high melting point and the metal particles having a low melting point is not particularly limited. For example, as the particle size decreases, the alloy reaction and the diffusion proceed at a lower temperature. Therefore, the particle size and the shape are appropriately selected in consideration of the process design and the influence of heat history on battery characteristics.

The resin used for the thermosetting conductive paste may be any resin that functions as a binder, and is appropriately selected in accordance with the production process to be employed and in consideration of, for example, printability and coatability. The resin used for the thermosetting conductive paste includes, for example, a thermosetting resin. Examples of the thermosetting resin include (i) amino resins such as urea resin, melamine resin, and guanamine resin, (ii) epoxy resins such as bisphenol A epoxy resin, bisphenol F epoxy resin, phenol novolac epoxy resin, and alicyclic epoxy resin, (iii) oxetane resins, (iv) phenolic resins such as resol phenolic resin and novolac phenolic resin, and (v) silicone-modified organic resins such as silicone epoxy resin and silicone polyester resin. For the resin, these materials may be used alone or in combination of two or more.

### (Other embodiments)

The battery according to the present disclosure has been described based on the embodiment, but the present disclosure is not limited to the embodiment. Various modifications of the embodiment conceivable by those skilled in the art and other embodiments achieved by combining some of the constituent elements of the embodiment also fall within the scope of the present disclosure without departing from the spirit of the present disclosure.

For example, two or more of the batteries according to the above embodiment may be stacked to form a battery stack. When two or more of the batteries are stacked, each of the batteries does not necessarily include a substrate. For example, two or more batteries including no substrate are stacked, and substrates are bonded to the uppermost layer and lowermost layer of the stacked batteries. When a substrate made of a noninflammable material such as alumina is disposed between the stacked batteries, the spread of burning of the batteries can be suppressed because the power-generating element is isolated by the substrate.

For example, in the above embodiment, the through-holes are formed so as to be perpendicular to the upper surface and lower surface of the substrate, but the form of the through-holes is not limited thereto. The through-holes may be formed in the substrate so as to incline with respect to the thickness direction. In this case, even when the number of through-holes is the same, the surface area of the substrate increases. The substrate may have through-holes formed in a direction perpendicular to the thickness direction.

For example, in the above embodiment, the upper surface and lower surface of the substrate are flat, but the form of the upper surface and lower surface is not limited thereto. The upper surface and lower surface of the substrate may have projections and depressions. For example, when projections and depressions are formed on a surface of the substrate in contact with the electrode layer, the area of the interface between the substrate and the electrode layer is increased by bringing the electrode layer into contact with the substrate along the projections and depressions by using a press or the like. As a result, heat is easily moved to the substrate. When projections and depressions are formed on a surface of the substrate that is not in contact with the electrode layer, the surface area of the substrate increases, which improves the heat dissipation property of the substrate.

Various modifications, replacement, addition, and omission can be made to the above embodiments within the scope of the appended claims and the equivalents thereof.

### Industrial Applicability

The battery according to the present disclosure can be used as a secondary battery such as an all-solid-state battery used for, for example, various electronic devices or automobiles.

### Reference Signs List

100, 120 electrode layer
110 electrode layer (positive electrode layer)
111 electrode active material layer (positive electrode active material layer)
121 electrode active material layer
112 electrode current collector (positive electrode current collector)
200, 220 counter electrode layer
210 counter electrode layer (negative electrode layer)
211 counter electrode active material layer (negative electrode active material layer)
221 counter electrode active material layer
212 counter electrode current collector (negative electrode current collector)
300, 310 solid electrolyte layer
400, 410 substrate
500 through-hole
600 bonding portion
1000, 1100, 1200 battery

## Claims

1. A battery comprising:
a first electrode;
a second electrode;
a solid electrolyte layer located between the first electrode and the second electrode; and
a substrate in contact with a surface of the first electrode opposite to the solid electrolyte layer,
wherein the substrate has at least one through-hole that extends from an upper surface of the substrate to a lower surface of the substrate and that has an electrically conductive inner wall, and
the upper surface and the lower surface are electrically conductive.

2. The battery according to Claim 1,
wherein the substrate is a heat sink.

3. The battery according to Claim 1 or 2,
wherein the first electrode includes a first current collector, and
the first current collector is in contact with the substrate.

4. The battery according to any one of Claims 1 to 3,
wherein the inner wall of the through-hole and the first electrode are bonded to each other through a conductor.

5. The battery according to Claim 4,
wherein the conductor includes the same material as the first electrode.

6. The battery according to Claim 4,
wherein the conductor includes a cured product of a thermosetting conductive paste.

7. The battery according to any one of Claims 1 to 6,
wherein the at least one through-hole disposed in the substrate comprises a plurality of through-holes, and
a number density of the plurality of through-holes per unit area changes from a center toward a periphery of the substrate when viewed in plan.

8. The battery according to Claim 7,
wherein the number density decreases from the center to the periphery of the substrate when viewed in plan.

9. The battery according to any one of Claims 1 to 8,
wherein the substrate is harder than the first electrode.

10. The battery according to any one of Claims 1 to 9,
wherein the substrate has a lower specific gravity than the first electrode.

11. The battery according to Claim 3,
wherein the substrate includes the same material as the first current collector.

12. The battery according to any one of Claims 1 to 11,
wherein the substrate includes alumina.

13. The battery according to any one of Claims 1 to 12,
wherein the substrate includes a resin.
